# EUROPÄISCHE PATENTANMELDUNG

(11) **EP 3 932 605 A1**
(43) Veröffentlichungstag der Anmeldung: **05.01.2022**
(21) Anmeldenummer: 20183479.3
(22) Anmeldetag: 01.07.2020
(51) Int. Cl.: B23K 9/29, B23K 9/32, B23K 15/00, B23K 26/08, B23K 26/21, B23K 26/70, B23K 37/02, B23Q 1/03, B23Q 1/70, B25J 15/04

(54) **SCHWEISSBRENNERSYSTEM MIT EINER WECHSELKUPPLUNG UND SCHWEISSBRENNER, BRENNERWECHSELSTATION, UND VERFAHREN ZUM AUFNEHMEN EINES SCHWEISSBRENNER EINES SCHWEISSBRENNERSYSTEM MIT EINEM SCHWEISSROBOTER**

(71) Anmelder: Fronius International GmbH, 4643 Pettenbach (AT)
(72) Erfinder: Windischbauer, Jürgen, 4600 Wels-Thalheim (AT); Hiesmayr, Thomas, 4600 Wels-Thalheim (AT)
(74) Vertreter: Patentanwälte Pinter & Weiss OG

(57) **Zusammenfassung**

Um den Wechsel eines Schweißbrenners (2b) an einem Schweißroboter zu vereinfachen ist ein Schweißbrennersystem mit einer Wechselkupplung (2a) und einem Schweißbrenner (2b) vorgesehen, die voneinander gelöst werden können. An der Wechselkupplung (2a) sind ein erster Justierring (25a) federnd gelagert angeordnet und ein erstes Justierelement (32a) vorgesehen. Am Schweißbrenner (2b) sind ein zweiter Justierring (25b) und ein zweites Justierelement (32b) vorgesehen. Der erste Justierring (25a) ist bei von der Wechselkupplung (2a) gelöstem Schweißbrenner (2b) axial vom ersten Kupplungsende beabstandet angeordnet, so dass das erste Justierelement (32a) und das zweite Justierelement (32b) beim Verbinden des Schweißbrenners (2b) mit der Wechselkupplung (2a) zur Ausrichtung des Schweißbrenners (2b) relativ zur Wechselkupplung (2a) in Eingriff gelangen bevor Schweißbrennerkupplungsteile (16a, 16b) am Schweißbrenner (2b) und an der Wechselkupplung (2a) wechselwirken.

## Beschreibung

Die Erfindung betrifft ein Schweißbrennersystem mit einer Wechselkupplung und einem Schweißbrenner, wobei der Schweißbrenner lösbar an der Wechselkupplung anordenbar ist, indem an der Wechselkupplung ein erster Schweißbrennerkupplungsteil vorgesehen ist und am Schweißbrenner ein zweiter Schweißbrennerkupplungsteil vorgesehen ist, die zum Verbinden des Schweißbrenners mit der Wechselkupplung zusammenwirken, sowie eine zugehörige Brennerwechselstation zur Aufnahme eines Schweißbrenners des Schweißbrennersystems. Die Erfindung betrifft ferner ein Verfahren zum Aufnehmen eines Schweißbrenners eines Schweißbrennersystems mit einem Schweißroboter, wobei mit dem Schweißroboter eine Wechselkupplung des Schweißbrennersystems bewegt wird, die mit dem in einer Brennerwechselstation angeordneten Schweißbrenner verbunden wird.

In Roboterschweißanlagen wird ein Schweißbrenner in bekannter Weise von einem Schweißroboter geführt, um die gewünschte Schweißaufgabe durchzuführen. Aus verschiedenen Gründen kann es vorkommen, dass der Schweißbrenner gewechselt werden muss. Beispielsweise können für verschiedene Schweißnähte verschiedene Schweißbrenner vorgesehen sein. Auch kann es sein, dass ein Schweißbrenner regelmäßig zur Wartung gewechselt wird, beispielsweise um den Schweißbrenner von Schweißspritzern zu reinigen. Zum Wechseln des Schweißbrenners kann eine Wechselkupplung zur Aufnahme des Schweißbrenners vorgesehen sein, die am Schweißroboter befestigt ist und die das Wechseln des Schweißbrenners ermöglicht. Zum Wechseln wird der Schweißbrenner vom Schweißroboter in eine Wechselstation bewegt, in der der Schweißbrenner in eine Schweißbrenneraufnahme abgelegt wird, indem die Wechselkupplung gelöst wird. Danach wird der Schweißroboter zu einer anderen Schweißbrenneraufnahme bewegt, in der ein anderer Schweißbrenner abgelegt ist, der mit Hilfe des Schweißroboters und der Wechselkupplung aufgenommen wird. Danach kann der Schweißroboter mit dem neuen Schweißbrenner wieder Schweißaufgaben durchführen. Der Schweißroboter kann aber auch denselben Schweißbrenner aus derselben oder einer anderen Schweißbrenneraufnahme wiederaufnehmen, beispielsweise nachdem dieser gereinigt wurde.

Die Schwierigkeit war bisher, dass der Schweißroboter die zusammenwirkenden Kupplungsteile an der Wechselkupplung und am Schweißbrenner sehr genau ausrichten musste, um eine reibungslose Aufnahme des Schweißbrenners in der Wechselkupplung zu ermöglichen. Bei unzureichender Ausrichtung kann es beispielsweise zu einem Verkanten des Schweißbrenners in die Wechselkupplung kommen, was die Aufnahme des Schweißbrenners erschweren oder verhindern kann. Daher musste bisher die Bewegung des Schweißroboters relativ zum Schweißbrenner in der Schweißbrenneraufnahme der Wechselstation sehr genau programmiert werden, um die Aufnahme sicherzustellen. Der Schweißroboter konnte dazu auch nur sehr langsam bewegt werden. Das macht den Wechsel eines Schweißbrenners aufwendig in der Vorbereitung und erforderte auch viel Zeit zur Durchführung.

Es ist folglich eine Aufgabe der gegenständlichen Erfindung den Wechsel eines Schweißbrenners an einem Schweißroboter zu vereinfachen.

Diese Aufgabe wird durch ein Schweißbrennersystem nach Anspruch 1 gelöst. Das Schweißbrennersystem ermöglicht eine Brennerwechselstation nach Anspruch 4 und ein Verfahren zum Aufnehmen eines Schweißbrenners eines Schweißbrennersystems mit einer Wechselkupplung an einem Schweißroboter nach Anspruch 8.

Dadurch, dass der Schweißbrenner durch die zusammenwirkenden ersten und zweiten Justierringe zuerst relativ zur Wechselkupplung ausgerichtet wird, bevor die Schweißbrennerkupplungsteile ineinander fahren und wechselwirken können, ist es möglich, den Wechselvorgang einerseits schneller durchzuführen, weil die korrekte Ausrichtung sichergestellt ist, unabhängig von der absolut korrekten "Bahn" des Schweißroboters. Die Bewegung des Schweißroboters muss nicht hochgenau programmiert werden, weil sich der Schweißbrenner durch die Ausrichtung an die Bewegung der Wechselkupplung am Schweißroboter anpasst. Damit kann die Zeit für einen Wechsel eines Schweißbrenners auch deutlich verkürzt werden, weil der Schweißroboter dabei schneller bewegt werden kann als bisher üblich.

Die schwimmende Lagerung des Schweißbrenners in der Brenneraufnahme kann vorteilhaft mittels einer kardanischen Aufhängung realisiert werden, an der der Schweißbrenner aufgehängt ist. Eine kardanische Aufhängung kann die erforderlichen Bewegungsfreiheitsgrade zur Ausrichtung des Schweißbrenners relativ zur Wechselkupplung auf einfache Weise realisieren. Mit der kardanischen Aufhängung können bis zu sechs Bewegungsfreiheitsgrade realisiert werden.

Um den Wechsel des Schweißbrenners zu vereinfachen, kann vorgesehen sein, dass die kardanische Aufhängung in Umfangsrichtung mit einer Ausnehmung unterbrochen ist. Das erleichtert das Ablegen des Schweißbrenners in die Brenneraufnahme und das Aufnehmen des Schweißbrenners aus der Brenneraufnahme.

Um eine definierte Umfangslage des Schweißbrenners an der Brenneraufnahme sicherzustellen, ist am zweiten Justierring, oder an der Schulter, ein axialer Vorsprung vorgesehen, der in die Ausnehmung eingreift. Damit kann die Programmierung des Schweißroboters zum Wechsel des Schweißbrenners noch weiter vereinfacht werden.

Eine weitere Verbesserung der Ablage des Schweißbrenners in der Brenneraufnahme ergibt sich, wenn ein konisch verlaufender axialer Vorsprung am Justierring des Schweißbrenners in einer damit zusammenwirkenden konisch verlaufenden Vertiefung an der Brenneraufnahme abgelegt wird, oder umgekehrt. Damit wird der Schweißbrenner mittig an der Brenneraufnahme positioniert, was die Programmierung des Schweißroboters zum Wechsel des Schweißbrenners noch weiter vereinfacht.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt
Fig.1 zeigt eine Schweißroboteranordnung mit einer Brennerwechselstation,
Fig.2 und 3 eine Wechselkupplung eines Schweißbrennersystems und einen Schweißbrenner,
Fig.4 und 6 einen Schweißbrenner und eine Wechselkupplung eines Schweißbrennersystems in einer Ausführung nach der Erfindung,
Fig.5 eine kardanische Aufhängung zur schwimmenden Lagerung des Schweißbrenners, und
Fig.7 und 8 die Durchführung der Aufnahme eines Schweißbrenners mit einer an einem Schweißroboter angeordneten Wechselkupplung.

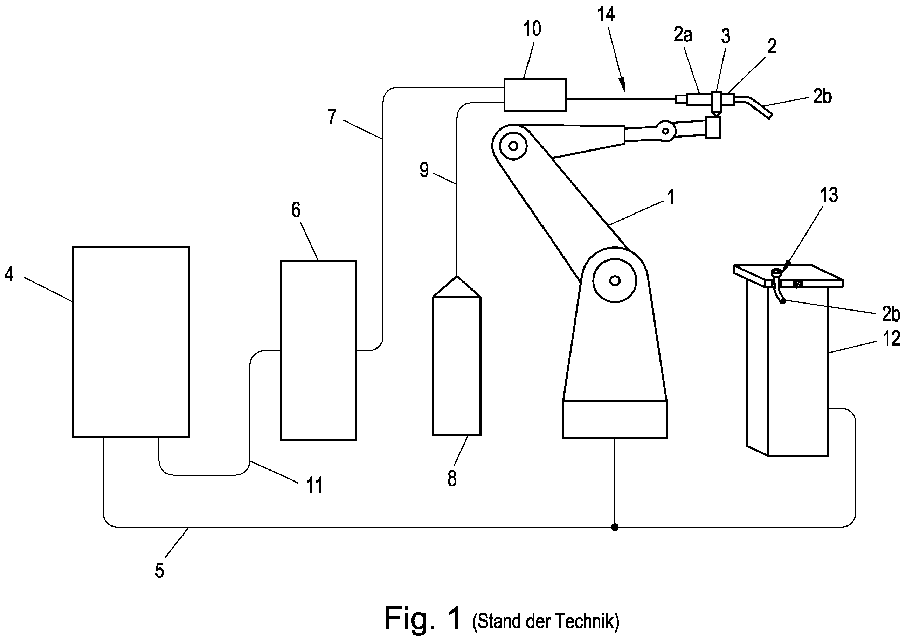

Mit Fig.1 wird eine typische Schweißroboteranordnung zum Durchführen einer Schweißaufgabe an einem Werkstück (nicht dargestellt) beschrieben. Natürlich kann eine Schweißroboteranordnung in bekannter Weise auch andere, weniger oder zusätzliche Komponenten als in Fig.1 gezeigt beinhalten.

An einem Schweißroboter 1 ist an einer Werkzeugaufnahme 3 ein Schweißbrennersystem 2 mit einer Wechselkupplung 2a und einem Schweißbrenner 2b befestigt. Der Schweißroboter 1 kann ein beliebiger x-achsiger Roboter sein und kann als serielle oder parallele Kinematik ausgeführt sein. Der Schweißroboter 1 kann bis zu sechs Bewegungsfreiheitsgrade der Werkzeugaufnahme 3 im Raum ermöglichen und ist mit ausreichend vielen Bewegungsachsen, die rotatorisch oder translatorisch sein können, ausgeführt. Standard sind heutzutage 6-achsige Roboter in Form serieller Kinematiken. Die Bewegungen des Schweißroboters 1 hinsichtlich Bewegungsfolge der Werkzeugaufnahme 3 ist frei programmierbar und kann auch sensorgeführt sein. Üblicherweise ist an der Werkzeugaufnahme 3 oder am Werkzeug (hier der Schweißbrenner 2) ein Werkzeugmittelpunkt, ein sogenannter Tool Center Point (TCP), definiert, dessen Bewegung geplant und programmiert wird. Zur Steuerung der Bewegung des Schweißroboters 1 dient eine Robotersteuerung 4, die über geeignete Schnittstellen programmiert werden kann. Die Robotersteuerung 4 ist eine separate Computerhardware mit entsprechender Software, kann aber auch im Schweißroboter 1 integriert sein.

Die Robotersteuerung 4 kann zur Steuerung des Schweißroboters 1 über eine Steuerleitung 5 mit dem Schweißroboter 1 verbunden sein, wobei auch eine drahtlose Steuerverbindung zwischen Robotersteuerung 4 und Schweißroboter 1 denkbar ist. Über die Steuerleitung 5 werden zur Steuerung des Schweißroboters 1 benötigte Daten ausgetauscht, wie z.B. Steuerbefehle zum Schweißroboter 1 und/oder Sensordaten (z.B. der Antriebsachsen des Schweißroboters 1) zur Robotersteuerung 4.

Eine Schweißenergiequelle 6 erzeugt die zum Schweißen erforderliche Energie. Die Schweißenergie kann elektrische Energie sein, beispielsweise in Form eines elektrischen Schweißstromes und einer elektrischen Schweißspannung, für das Lichtbogenschweißen oder in Form eines Laserstrahls für das Laserschweißen oder eines Elektronenstrahls für das Elektronenstrahlschweißen. Beim Lichtbogenschweißen wird der elektrische Schweißstrom zum Schweißen über eine (nicht dargestellte) Schweißelektrode, die entweder abschmelzend (wie z.B. beim Metall-Inertgasschweißen (MIG) oder Metall-Aktivgasschweißen (MAG)) oder auch nicht abschmelzend (wie z.B. beim Wolfram-Inertgasschweißen (WIG)) ausgeführt sein kann, geleitet. Zwischen Schweißelektrode und zu schweißendem Werkstück brennt beim Schweißen ein Lichtbogen. Dabei ist das Werkstück über eine nicht dargestellte Masseleitung mit der Schweißenergiequelle 6 verbunden, um den elektrischen Schweißstromkreis zu schließen. Eine Masseleitung ist beim Laserschweißen oder Elektronenstrahlschweißen natürlich nicht erforderlich. Die Schweißenergie wird über eine Schweißenergieleitung 7 von der Schweißenergiequelle 6 zum Schweißbrenner 2 geleitet. Die Schweißenergieleitung 7 ist oftmals in einem Schlauchpaket 14 integriert, in der mehrere Schweißleitungen zusammengefasst werden, beispielsweise eine Leitung für die Schweißenergie, eine Schutzgasleitung für die Zuführung von Schutzgas beim Schutzgasschweißen, eine Kühlmediumleitung (auch als Hin- und Rückleitung) zum Zuführen von Kühlmedium zum Schweißbrenner 2, Steuerleitungen zum Steuern des Schweißbrenners 2 und/oder Sensorleitungen zum Übermitteln von allfälligen Sensordaten zur Schweißenergiequelle 6. Ferner kann dem Schweißbrenner 2 auch ein Schweißzusatzwerkstoff 9 (auch als abschmelzende Schweißelektrode), beispielsweise in Form eines Schweißdrahtes, zugeführt werden, auch in einem eigenen Förderschlauch oder im Schlauchpaket 14.

Für den Schweißzusatzwerkstoff 9 kann ein Schweißzusatzwerkstoffbehälter 8 vorgesehen sein, aus dem der Schweißzusatzwerkstoff 9 entnommen werden kann. Es kann eine Vorschubeinheit 10 vorgesehen sein, beispielsweise am Schweißroboter 1 oder an einer anderen geeigneten Position, um den Schweißzusatzwerkstoff 9 zum Schweißbrenner 2 oder zur Schweißstelle zu fördern.

Üblicherweise ist die Schweißenergiequelle 6 über eine Steuerleitung 11 auch mit der Robotersteuerung 4 verbunden, sodass über ein Schweißprogramm in der Robotersteuerung 4 auch die Schweißenergiequelle 6 (und gegebenenfalls auch eine Vorschubeinheit 10) und damit auch der auszuführende Schweißprozess gesteuert werden kann, beispielsweise zum Steuern von Schweißparametern, wie dem zeitlichen Verlauf eines Schweißstroms oder der Vorschubgeschwindigkeit und deren zeitlicher Verlauf eines Schweißdrahtes.

Es kann auch eine Brennerwechselstation 12 vorgesehen sein, in der eine Anzahl von Brenneraufnahmen 13 zur Aufnahme eines Schweißbrenners 2b vorgesehen sind. Auch die Brennerwechselstation 12 kann über eine Steuerleitung 5 mit der Robotersteuerung 4 verbunden sein, um von dieser gesteuert werden zu können und/oder um mit diesen Daten, beispielsweise die Position bestimmter Schweißbrenner in der Brennerwechselstation 12, austauschen zu können.

Die Steuerleitungen 5, 11 können als Datenbus zur Datenkommunikation konzipiert sein, sowohl drahtgebunden, als auch drahtlos.

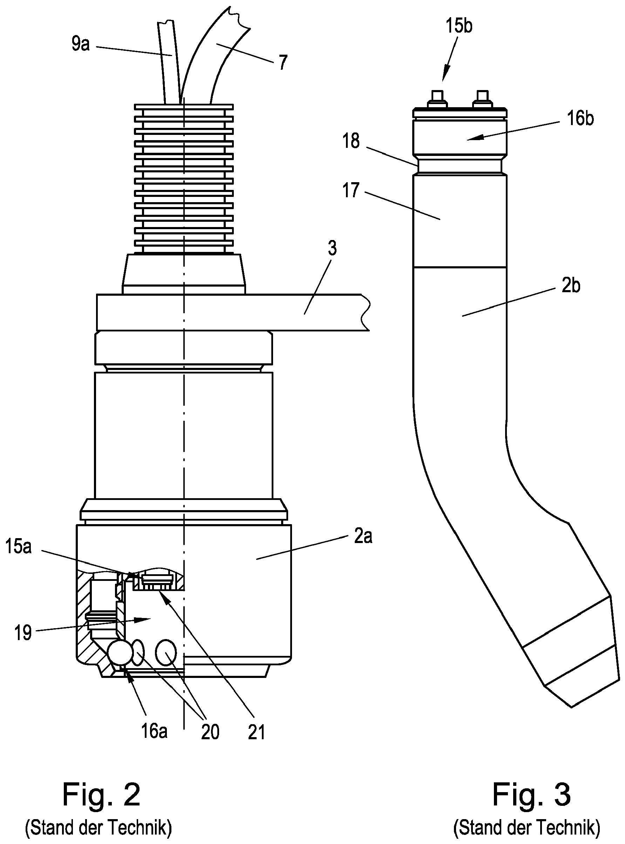

Das Schweißbrennersystem 2 ist zweiteilig ausgeführt, wie anhand von Fig.2 und 3 erläutert wird. Eine Wechselkupplung 2a ist am Schweißroboter 1 angeordnet, beispielsweise an der Werkzeugaufnahme 3. In die Wechselkupplung 2a führen die für den Schweißprozess benötigten Schweißleitungen, beispielsweise eine Schweißenergieleitung 7, benötigte Medien- oder Steuerleitungen, eine Leitung 9a für Schweißzusatzwerkstoff 9 usw. An der Wechselkupplung 2a ist ein Schweißbrenner 2b wechselbar angeordnet (wie in Fig.1 dargestellt). Dazu können an der Wechselkupplung 2a und am Schweißbrenner 2b zusammenwirkende Schweißleitungskupplungsteile 15a, 15b von zumindest einer Schweißleitungskupplung 15 vorgesehen sein. Die Schweißleitungskupplung 15 stellt die durchgehende Verbindung der benötigten Schweißleitungen von der Wechselkupplung 2a zum Schweißbrenner 2b her und kann grundsätzlich beliebig ausgeführt sein. Die konkrete Ausführung der Schweißleitungskupplung 15 ist für die gegenständliche Erfindung nicht von Bedeutung.

Um die Wechselkupplung 2a mit dem Schweißbrenner 2b zu verbinden, ist eine Schweißbrennerkupplung 16 vorgesehen, mit einem ersten Schweißbrennerkupplungsteil 16a an der Wechselkupplung 2a und einem zweiten Schweißbrennerkupplungsteil 16b am Schweißbrenner 2b. Der erste Schweißbrennerkupplungsteil 16a wirkt mit dem zweiten Schweißbrennerkupplungsteil 16b zusammen, um den Schweißbrenner 2b an der Wechselkupplung 2a zu halten, oder um den Schweißbrenner 2b von der Wechselkupplung 2a trennen zu können. Der erste und zweite Schweißbrennerkupplungsteil 16a, 16b sind dazu lösbar miteinander koppelbar. Die konkrete Ausführung der Schweißbrennerkupplung 16 ist für die Erfindung aber nicht von Bedeutung.

Üblicherweise sind an den beiden Schweißbrennerkupplungsteilen 16a, 16b Führungsabschnitte vorgesehen, die zusammenwirken, um einen Schweißbrennerkupplungsteil 16a in den anderen Schweißbrennerkupplungsteil 16b, oder umgekehrt, einzuführen.

In der dargestellten Ausgestaltung ist der zweite Schweißbrennerkupplungsteil 16b an einem axialen Kupplungsende des Schweißbrenners 2b als Kupplungsschaft 17 als zweiter Führungsabschnitt mit einer ringförmigen Kupplungsnut 18 ausgeführt. Das gegenüberliegende vordere Ende des Schweißbrenners 2b ist im Einsatz des Schweißbrenners 2b dem zu schweißenden Werkstück zugewandt. Der Kupplungsschaft 17 kann in eine Kupplungsausnehmung 19 als erster Führungsabschnitt an einem axialen Ende des ersten Schweißbrennerkupplungsteils 16a eingeführt werden. Am ersten Schweißbrennerkupplungsteil 16a sind über den Umfang verteilt Spannkugeln 20, oder andere geeignete Spannkörper, angeordnet, die teilweise in die Kupplungsausnehmung 19 ragen. Die Spannkugeln 20 können aus der Kupplungsausnehmung 19 verdrängt werden oder können in der Position, in der sie teilweise in die Kupplungsausnehmung 19 hineinragen, fixiert werden. Beispielsweise könnten die Spannkugeln 20 hydraulisch, pneumatisch, mechanisch, elektromagnetisch oder anderweitig bewegt bzw. in der Position fixiert werden.

Zum Verbinden des Schweißbrenners 2b mit der Wechselkupplung 2a wird der Kupplungsschaft 17 und die Kupplungsausnehmung 19 bis zu einem in der Kupplungsausnehmung 19 ausgebildeten axialen Anschlag 21 zusammengeführt, beispielsweise indem die Wechselkupplung 2a auf die Schweißbrenner 2b gesteckt wird, oder umgekehrt der Schweißbrenner 2b in die Wechselkupplung 2a gesteckt wird. Dabei werden die Spannkugeln 20 vom Kupplungsschaft 17 verdrängt, oder auch aktiv aus der Kupplungsausnehmung 19 zurückgezogen. Wenn der Kupplungsschaft 17 bis zum Anschlag 21 in die Kupplungsausnehmung 19 eingeführt ist, liegen die Spannkugeln 20 im Bereich der der Kupplungsnut 18 am Kupplungsschaft 17 und greifen in die Kupplungsnut 18 ein. Die Spannkugeln 20 können in der Position fixiert werden, womit der Schweißbrenner 2b fest an der Wechselkupplung 2a gehalten wird. In dieser Position des Kupplungsschaftes 17 ist vorzugsweise auch die Verbindung über die Schweißleitungskupplung 15 hergestellt. Zum Trennen des Schweißbrenners 2b von der Wechselkupplung 2a wird im Wesentlichen umgekehrt vorgegangen, also die Fixierung der Spannkugeln 20 gelöst und der Kupplungsschaft 17 und die Kupplungsausnehmung 19 auseinandergeführt.

An diesem Ausführungsbeispiel ist auch erkennbar, dass das Wechseln des Schweißbrenners 2b durch leichtes Verkanten eines Führungsabschnittes, wie des Kupplungsschaftes 17, erschwert oder unmöglich wird. Außerdem müssen die Schweißleitungskupplungsteile 15a, 15b genau zueinander ausgerichtet sein, um die Schweißleitungskupplung 15 herzustellen. Dazu bedarf es einer sehr genauen Bewegung des Schweißroboters 1, was eine aufwendige Programmierung zum Wechsel des Schweißbrenners 2b erforderlich macht. Ein solcher Wechsel erfordert auch viel Zeit, da der Schweißroboter 1 dabei nur langsam bewegt werden kann.

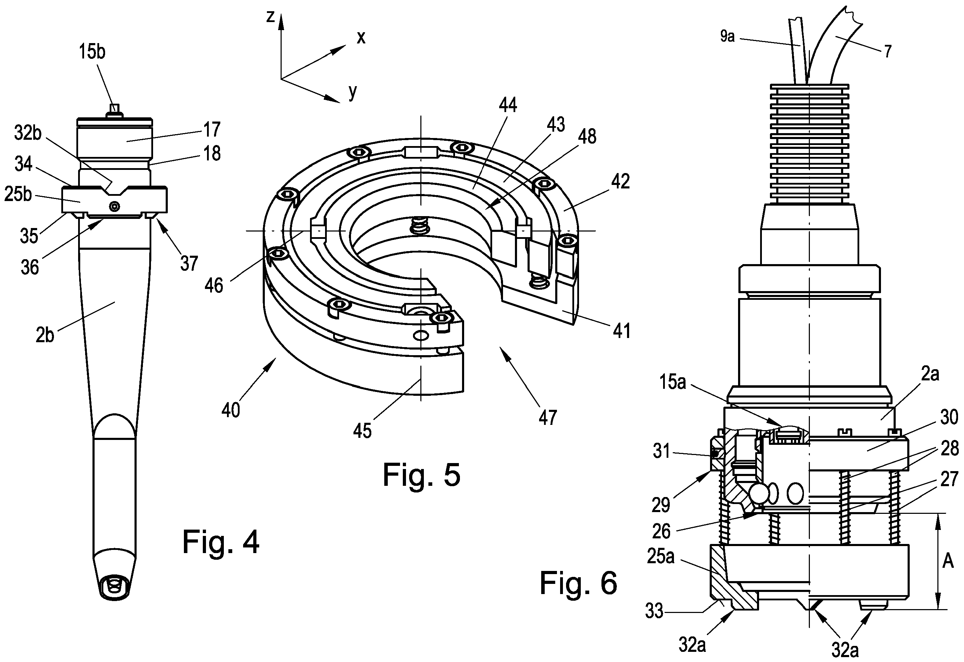

Die erfindungsgemäße Ausführung der Wechselkupplung 2a und des Schweißbrenners 2b zur Durchführung eines Wechsels des Schweißbrenners 2b wird nachfolgend mit Bezugnahme auf die Fig.4 bis 6 erläutert.

An der Wechselkupplung 2a ist ein erster Justierring 25a (Fig.6) angeordnet und am Schweißbrenner 2b ein zweiter Justierring 25b (Fig.4). Der erste Justierring 25a und der zweite Justierring 25b wirken bei Verwendung zum Ausrichten des Schweißbrenners 2b relativ zur Wechselkupplung 2a zusammen, wie nachfolgend noch erläutert wird. "Ring" bedeutet dabei nicht zwangsweise einen kreisrunden Querschnitt und der "Ring" muss in Umfangsrichtung auch nicht zwingend geschlossen sein. Der erste Justierring 25a und der zweite Justierring 25b können folglich auch anders als dargestellt ausgeführt sein.

Der zweite Justierring 25b ist beispielsweise als Ring ausgeführt, der über den Kupplungsschaft 17 gesteckt wird und am Schweißbrenner 2b fixiert wird, beispielsweise mit Wurmschrauben. Der zweite Justierring 25b kann aber auch ganz oder teilweise Teil des Schweißbrenners 2b sein.

An der Wechselkupplung 2a ist wichtig, dass der erste Justierring 25a axial so weit vom axialen Ende 26 der Wechselkupplung 2a beabstandet angeordnet ist, dass der erste Justierring 25a und der zweite Justierring 25b beim Wechseln des Schweißbrenners 2b in Eingriff geraten, bevor die Wechselkupplung 2a und der Schweißbrenner 2b, oder genauer die zusammenwirkenden Führungsabschnitte des ersten Schweißbrennerkupplungsteils 16a und des zweiten Schweißbrennerkupplungsteils 16b, durch das ineinander Fahren wechselwirken. Das stellt sicher, dass sich der Schweißbrenner 2b ungehindert ausrichten kann, bevor eine Wechselwirkung zwischen erstem Schweißbrennerkupplungsteil 16a und zweitem Schweißbrennerkupplungsteil 16b eintritt. "Wechselwirken" bedeutet in diesem Zusammenhang, dass zumindest ein Bewegungsfreiheitsgrad des ersten Schweißbrennerkupplungsteils 16a durch den zweiten Schweißbrennerkupplungsteil 16b, oder umgekehrt, behindert ist.

Dazu ist der erste Justierring 25a axial beabstandet vom axialen Ende 26 der Wechselkupplung 2a angeordnet und in axialer Richtung z (der Richtung, in der die beiden Schweißbrennerkupplungsteile 16a, 16b ineinander fahren) über zumindest eine Feder 27 federnd gelagert.

In der Ausführung nach Fig.6 sind über den Umfang der Wechselkupplung 2a verteilt eine Mehrzahl von Bolzen 28 angeordnet und mit dem Justierring 25a verbunden. An der Wechselkupplung 2a ist eine radial vorspringende Schulter 29 vorgesehen, durch die die Bolzen 28 geführt sind. Die Bolzen 28 sind in axialer Richtung in der Schulter 29 frei beweglich angeordnet. Die Schulter 29 kann beispielsweise als Befestigungsring 30 (wieder mit der obigen allgemeinen Definition von Ring) ausgeführt sein, der über den Außenumfang der Wechselkupplung 2a gesteckt wird und an diesem befestigt wird, beispielsweise mittels Wurmschrauben 31, wie in Fig.6. Zwischen der Schulter 29 und dem ersten Justierring 25a sind Federn 27 angeordnet, beispielsweise über die Bolzen 28 gesteckte Spiralfedern, die den ersten Justierring 25a und die Schulter 29 in axialer Richtung auseinander drücken. Die Federn 27 könnten aber auch als Gasdruckfedern oder anderweitiges geeignetes Federelement ausgeführt sein, womit Bolzen 28 unter Umständen auch überflüssig sein können. Der erste Justierring 25a ist damit in axialer Richtung z gegen die Wirkung der zumindest einen Feder 27 frei beweglich, zumindest innerhalb des konstruktiv möglichen axialen Bewegungsbereichs.

Am ersten Justierring 25a ist an der der Wechselkupplung 2a abgewandten Stirnfläche 33 zumindest ein erstes Justierelement 32a vorgesehen, beispielsweise axiale Vorsprünge wie in der Ausführung nach Fig.6 oder auch axiale Vertiefungen. Im Falle mehrerer erster Justierelemente 32a sind diese vorzugsweise über den Umfang verteilt angeordnet. Am zweiten Justierring 25b ist an der dem axialen Kupplungsende zugewandten Stirnfläche 34 des zweiten Justierrings 25b zumindest ein zweites Justierelement 32b vorgesehen, beispielsweise axiale Vertiefungen wie in der Ausführung nach Fig.4 oder auch axiale Vorsprünge. Im Falle mehrerer zweiter Justierelemente 32b sind diese vorzugsweise über den Umfang verteilt angeordnet. Das zumindest eine erste Justierelement 32a und das zumindest eine zweite Justierelement 32b wirken zur Ausrichtung des Schweißbrenners 2b relativ zur Wechselkupplung 2a zusammen, indem die beiden Justierelement 32a, 32b bei Verwendung in Eingriff kommen, wie nachfolgend erläutert wird. Um den Eingriff und das Ausrichten zu erleichtern, können an den zumindest einen ersten und zweiten Justierelementen 32a, 32b auch schräge Flanken vorgesehen sein, wie in den Ausführungen nach Fig.4 und 6. Bei Verwendung einer Vertiefung, oder eines Vorsprungs, als das zumindest eine erste Justierelement 32a und eines passenden Vorsprunges, oder einer passenden Vertiefung, als das zumindest eine zweite Justierelement 32b kann die Ausrichtung des Schweißbrenners 2b in Drehrichtung um die z-Achse einfach realisiert werden. Damit richtet sich der Schweißbrenner 2b in Drehrichtung auf die Wechselkupplung 2a aus.

Um ein ungehindertes Ausrichten des Schweißbrenners 2b an der Wechselkupplung 2a zu ermöglichen, ist der erste Justierring 25a bei getrenntem Schweißbrenner 2b um einen Axialabstand A in axialer Richtung z vom Kupplungsende der Wechselkupplung 2a beabstandet angeordnet. Der Axialabstand A wird so gewählt, dass der zweite Justierring 25b mit dem ersten Justierring 25a beim Verbinden des Schweißbrenners 2b und der Wechselkupplung 2a zum Ausrichten zusammenwirken können, beispielsweise über die ersten und zweiten Justierelemente 32a, 32b, bevor die Schweißbrennerkupplungsteile 16a, 16b zusammenwirken. Damit ist ein Ausrichten des Schweißbrenners 2b durch die Justierringe 25a, 25b möglich, ohne dass das Ausrichten von den Schweißbrennerkupplungsteilen 16a, 16b gestört wird.

Damit sich der Schweißbrenner 2b bei Ablage in einer Brennerwechselstation 12 bzw. bei Aufnahme aus der Brennerwechselstation 12 relativ zur Wechselkupplung 2a ausrichten kann, ist dieser an der Brennerwechselstation 12 schwimmend gelagert. "Schwimmend gelagert" bedeutet dabei, dass der Schweißbrenner 2b gegenüber einer ortsfesten Aufhängung zumindest in den drei rotativen Bewegungsfreiheitsgraden (Drehbewegung um die x-, y-, z-Achsen) frei bewegbar (innerhalb der konstruktiven Grenzen) gelagert ist. Vorzugsweise ist der Schweißbrenner 2b durch die schwimmende Lagerung auch zumindest in einer der beiden, vorzugsweise in beiden, Querrichtungen (quer zur axialen z-Richtung), also in Richtung der x- oder y-Achse, translatorisch frei bewegbar. Eine angestrebte vollkommene schwimmende Lagerung wird erreicht, wenn der Schweißbrenner 2b auch in axialer z-Richtung frei bewegbar gelagert ist. Eine solche schwimmende Lagerung kann auf verschiedene Weisen realisiert werden.

Beispielsweise könnten an der dem Kupplungsende des Schweißbrenners 2b abgewandten Stirnfläche 35 des zweiten Justierrings 25b über den Umfang verteilt eine Mehrzahl von federnd gelagerten Stiften vorspringen, auf denen der Justierring 25 lose auf einer ortsfesten Aufhängung aufliegt. Damit kann sich der Schweißbrenner 2b relativ zur Aufhängung in allen Bewegungsfreiheitsgraden frei bewegen.

In einer anderen Ausführung, nach Fig.5, ist eine kardanische Aufhängung 40 für den Schweißbrenner 2b vorgesehen. Die Aufhängung 40 wird beispielsweise in einer Brenneraufnahme 13 an der Brennerwechselstation 12 ortsfest angeordnet, beispielsweise mit einer Grundplatte 41 der Aufhängung 40. An der Grundplatte 41 ist ein äußerer Ring 42 der kardanischen Aufhängung 40 angeordnet, wobei der äußere Ring 42 auch Teil der Grundplatte 41 sein kann. Wenn der äußere Ring 42 in axialer Richtung z federnd an der Grundplatte 41 gelagert ist, dann ist mit der kardanischen Aufhängung 40 zusätzlich eine Bewegung in axialer Richtung z möglich. Im äußeren festen Ring 42 sind gemäß dem Prinzip der kardanischen Aufhängung zwei Ringe 43, 44 ineinander drehbar gelagert, wobei die Drehachsen 45, 46 der inneren Ringe 43, 44 jeweils bevorzugt um 90° gegeneinander versetzt sind. Der zu lagernde Schweißbrenner 2b liegt am innersten Ring 44 auf. Wenn die Drehachsen 45, 46 ausgeführt sind, sodass sich der jeweils gelagerte Ring 43, 44 auch in Richtung der Drehachse 45, 46 verschieben kann, dann sind mit der Aufhängung 40 auch Bewegungen in den Querrichtungen (x- und y-Richtung) möglich. Das kann beispielsweise erreicht werden, wenn die Drehachsen 45, 46 als Spiralfedern ausgeführt sind. Dazu können auch die inneren Ringe 43, 44 in axialer Richtung z durch eine Feder gelagert sein, wie in Fig.5, sodass diese auch in axialer Richtung z beweglich sind.

Um den Schweißbrenner 2b einfacher in der kardanischen Aufhängung 40 ablegen und aus dieser entnehmen zu können, kann die Aufhängung 40 in Umfangsrichtung auch mit zumindest einer Ausnehmung 47 unterbrochen sein, wie in Fig.5 dargestellt.

Der Schweißbrenner 2b wird dann in der Aufhängung 40 gelagert, indem der zweite Justierring 25b mit der dem Kupplungsende des Schweißbrenners 2b abgewandten Stirnfläche 35 am innersten Ring 44 der kardanischen Aufhängung 40 aufliegt. Dazu kann an dieser Stirnfläche 35 auch zumindest ein axialer Vorsprung 36 vorgesehen sein, um den Schweißbrenner 2b in einer bestimmten Umfangslage bezogen auf die z-Achse ablegen zu können. Beispielsweise könnte der Vorsprung 36 in die Ausnehmung 47 an der Aufhängung 40 eingreifen. Damit kann der Schweißbrenner 2b nur in einer bestimmten Umfangslage an der Aufhängung 40 gelagert werden, was den Wechsel des Schweißbrenners 2b erleichtert.

Ebenso kann an der der Brennerwechselstation 12 zugewandten Stirnfläche 35 des zweiten Justierringes 25b zumindest ein konischer axialer Vorsprung 37 vorgesehen sein, der sich über zumindest einen Teil des Umfangs des zweiten Justierringes 25b erstreckt. An der Brenneraufnahme 13 der Brennerwechselstation 12 kann eine gegengleich konisch verlaufende, zusammenwirkende Vertiefung 48 vorgesehen sein, in der der konisch verlaufende Vorsprung 37 aufliegt. Es ist natürlich auch eine umgekehrte Ausführung denkbar, also konische Vertiefung am zweiten Justierring 25b und konischer Vorsprung an der Brenneraufnahme 13. Das stellt eine mittige Ablage des Schweißbrenners 2b in der Brenneraufnahme 13 sicher, also mit fluchtenden z-Achsen. In der Ausführung mit einer kardanischen Aufhängung 40 nach Fig.5 ist die konische Vertiefung 48 beispielsweise an der inneren Umfangsfläche des innersten Ringes 44 vorgesehen.

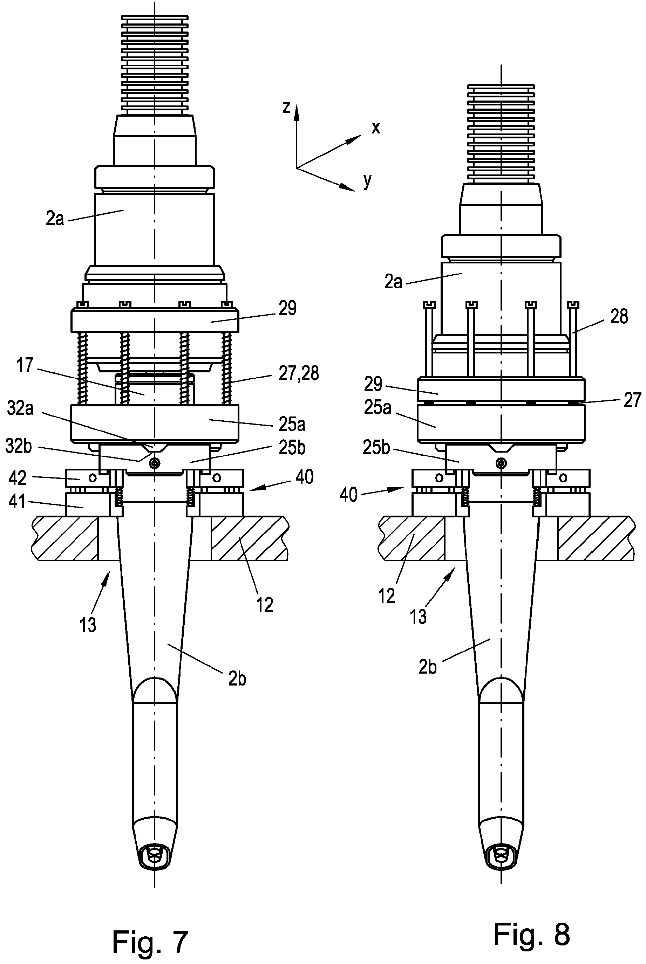

Mit den Fig.7 und 8 wird ein Wechsel eines Schweißbrenners 2b erläutert. In einer Brenneraufnahme 13 einer Brennerwechselstation 12 ist der Schweißbrenner 2b schwimmend gelagert angeordnet, beispielsweise mit einer kardanischen Aufhängung 40, die mit der Grundplatte 41 an der Brenneraufnahme 13 angeordnet ist. In der kardanischen Aufhängung 40 ist wie oben beschrieben ein Schweißbrenner 2b schwimmend gelagert (bezogen auf die ortsfeste Brenneraufnahme 13). Die Wechselkupplung 2a wird mit dem Schweißroboter 1 (in Fig.7 nicht dargestellt) zur Brenneraufnahme 13 bewegt. Dabei wird der erste Schweißbrennerkupplungsteil 16a an der Wechselkupplung 2a und der zweite Schweißbrennerkupplungsteil 16b am Schweißbrenner 2b durch den Schweißroboter 1 grob relativ zueinander zur Herstellung der Kupplung ausgerichtet, ohne dabei in Eingriff zu kommen. Die Wechselkupplung 2a wird dann mit dem Schweißroboter 1 in axialer Richtung (z-Richtung) in Richtung des Schweißbrenners 2b bewegt. Dabei kommt der erste Justierring 25a an der Wechselkupplung 2a mit dem zweiten Justierring 25b am Schweißbrenner 2b mit den zugewandten ersten und zweiten Justierelementen 32a, 32b in Eingriff, bevor die Schweißbrennerkupplungsteile 16a, 16b wechselwirken. Durch das Zusammenwirken der Justierringe 25a, 25b mit den Justierelementen 32a, 32b und der schwimmenden Aufhängung des Schweißbrenners richtet sich der Schweißbrenner 2b exakt an der Wechselkupplung 2a aus. Im Falle eines konisch zulaufenden ersten Justierelements 32a und eines gegengleich konisch verlaufenden zweiten Justierelements 32b, wird die Ausrichtung durch ein Verdrehen um die z-Achse erleichtert. Durch das Ausrichten sind auch die Schweißbrennerkupplungsteile 16a, 16b exakt zu einander ausgerichtet (in Fig.7 dargestellt), sodass diese bei weiterer Bewegung der Wechselkupplung 2a in Richtung des Schweißbrenners 2b ineinander fahren, um die Verbindung zwischen Wechselkupplung 2a und Schweißbrenner 2b herzustellen. Mit Fig.8 ist die Situation bei vollständig ineinander gefahrenen Wechselkupplung 2a und Schweißbrenner 2b dargestellt. Der federnd gelagerte erste Justierring 25a wurde gegen die federnde Lagerung in Richtung der Schulter 29 bewegt. Beispielsweise wurden die Bolzen 28 dabei durch die Schulter 29 bewegt und die Federn 27 komprimiert. Sobald die Verbindung zwischen Wechselkupplung 2a und Schweißbrenner 2b fixiert wurde, kann der Schweißbrenner 2 mit dem Schweißroboter 1 aus der Brenneraufnahme 13 entnommen werden. Beim Ablegen des Schweißbrenners 2b in einer Brenneraufnahme 13 erfolgt im Wesentlichen der umgekehrte Bewegungsablauf.

Zur Durchführung des Wechsels des Schweißbrenners 2b ist keine hochgenaue Bewegung des Schweißroboters 1 erforderlich, weil sich die Wechselkupplung 2a und der Schweißbrenner 2b aufgrund der Justierringe 25a, 25b exakt zueinander ausrichten, bevor diese wechselwirken und bevor die Verbindung hergestellt wird. Daher kann die Wechselkupplung 2a bei Wechsel des Schweißbrenners 2b auch mit höherer Geschwindigkeit als bisher möglich bewegt werden. Das verkürzt die Zeit für den Wechsel des Schweißbrenners 2b erheblich.

Das erfindungsgemäße Schweißbrennersystem 2 kann aber natürlich auch so ausgeführt sein, dass der erste federnd gelagert und axial vom axialen Ende beabstandet angeordnete Justierring 25a und die Schulter 29 nicht an der Wechselkupplung 2a, sondern am Schweißbrenner 2b angeordnet ist. Demgemäß wäre der zweite Justierring 26 an der Wechselkupplung 2a angeordnet. Der Schweißbrenner 2b könnte dann an der Schulter 29 an der Aufhängung 40 schwimmend gelagert anliegen. Das Prinzip der Ausrichtung bevor die Wechselkupplung 2a und der Schweißbrenner 2b ineinander fahren wäre dabei das gleiche.

## Patentansprüche

1. Schweißbrennersystem mit einer Wechselkupplung (2a) und einem Schweißbrenner (2b), wobei der Schweißbrenner (2b) lösbar an der Wechselkupplung (2a) anordenbar ist, indem an der Wechselkupplung (2a) ein erster Schweißbrennerkupplungsteil (16a) vorgesehen ist und am Schweißbrenner (2b) ein zweiter Schweißbrennerkupplungsteil (16b) vorgesehen ist, die zum Verbinden des Schweißbrenners (2b) mit der Wechselkupplung (2a) zusammenwirken, **dadurch gekennzeichnet, dass** an der Wechselkupplung (2a), oder am Schweißbrenner (2b), ein erster Justierring (25a) federnd gelagert angeordnet ist und am ersten Justierring (25a) an einer einem ersten Kupplungsende abgewandten Stirnfläche (33) des ersten Justierrings (25a) zumindest ein erstes Justierelement (32a) vorgesehen ist, **dass** am Schweißbrenner (2b), oder an der Wechselkupplung (2a), an einem zweiten Kupplungsende ein zweiter Justierring (25b) angeordnet ist und am zweiten Justierring (25b) an einer dem zweiten Kupplungsende zugewandten Stirnfläche (34) des zweiten Justierrings (25b) zumindest ein zweites Justierelement (32b) vorgesehen ist, **und dass** der erste Justierring (25a) bei von der Wechselkupplung (2a) gelöstem Schweißbrenner (2b) axial vom ersten Kupplungsende beabstandet angeordnet ist und der axiale Abstand (A) zwischen Wechselkupplung (2a), oder Schweißbrenner (2b), und dem ersten Justierring (25a) gewählt ist, sodass das zumindest erste Justierelement (32a) und das zumindest zweite Justierelement (32b) beim Verbinden des Schweißbrenners (2b) mit der Wechselkupplung (2a) in Eingriff gelangen bevor der erste Schweißbrennerkupplungsteil (16a) und der zweite Schweißbrennerkupplungsteil (16b) zur Herstellung der Verbindung wechselwirken.

2. Schweißbrennersystem nach Anspruch 1, **dadurch gekennzeichnet, dass** an der Wechselkupplung (2a), oder am Schweißbrenner (2b), eine Schulter (29) vorgesehen ist, an der der erste Justierring (25a) federnd gelagert angeordnet ist.

3. Schweißbrennersystem nach Anspruch 2, **gekennzeichnet, dass** über den Umfang der Schulter (29) verteilt eine Anzahl von Bolzen (28) verschiebbar gelagert angeordnet sind und über zumindest einen Bolzen (28) und zwischen Schulter (29) und ersten Justierring (25a) eine Spiralfeder (27) angeordnet ist.

4. Brennerwechselstation zur Aufnahme zumindest eines Schweißbrenners (2b) eines Schweißbrennersystems (2) nach einem der Ansprüche 1 bis 3 in einer Brenneraufnahme (13), wobei der Schweißbrenner (2b) in der Brenneraufnahme (13) schwimmend gelagert angeordnet ist.

5. Brennerwechselstation nach Anspruch 4, **dadurch gekennzeichnet, dass** in der Brenneraufnahme (13) eine kardanische Aufhängung (40) angeordnet ist, an der der Schweißbrenner (2b) schwimmend gelagert angeordnet ist.

6. Brennerwechselstation nach Anspruch 5, **dadurch gekennzeichnet, dass** die kardanische Aufhängung (40) in Umfangsrichtung mit zumindest einer Ausnehmung (47) unterbrochen ist.

7. Brennerwechselstation nach Anspruch 6, **dadurch gekennzeichnet, dass** am zweiten Justierring (25b), oder an der Schulter (29), ein axialer Vorsprung (36) vorgesehen ist, der in die Ausnehmung (47) eingreift.

8. Brennerwechselstation nach einem der Ansprüche 4 bis 7, **dadurch gekennzeichnet, dass** am zweiten Justierring (25b) des Schweißbrenners (2b) zumindest ein konisch verlaufender axialer Vorsprung (37) vorgesehen ist, der in einer damit zusammenwirkenden konisch verlaufenden Vertiefung (48) an der Brenneraufnahme (13), vorzugsweise an der kardanischen Aufhängung (40), aufliegt, oder umgekehrt.

9. Verfahren zum Aufnehmen eines Schweißbrenners (2b) eines Schweißbrennersystem (2)s mit einem Schweißroboter (1), wobei mit dem Schweißroboter (1) eine Wechselkupplung (2a) des Schweißbrennersystems (2) bewegt wird, die mit dem in einer Brennerwechselstation (12) angeordneten Schweißbrenner (2b) verbunden wird, **dadurch gekennzeichnet, dass** der Schweißbrenner (2b) in der Brennerwechselstation (12) schwimmend gelagert wird und die Wechselkupplung (2a) mit dem Schweißroboter (1) zum Schweißbrenner (2b) bewegt wird, sodass ein an der Wechselkupplung (2a), oder am Schweißbrenner (2b), federnd und um einen Abstand (A) axial beabstandet von einem axialen Kupplungsende gelagerter erster Justierring (25a) mit zumindest einem ersten Justierelement (32a) mit einem am Schweißbrenner (2b), oder an der Wechselkupplung (2a), angeordneten zweiten Justierring (25b) mit zumindest einem zweiten Justierelement (32b) zum Ausrichten des Schweißbrenners (2b) relativ zur Wechselkupplung (2a) zusammenwirkt, bevor ein erster Schweißbrennerkupplungsteil (16a) an der Wechselkupplung (2a) mit einem zweiten Schweißbrennerkupplungsteil (16b) am Schweißbrenner (2b) zur Herstellung der Verbindung zusammenwirkt.
